# EUROPÄISCHE PATENTANMELDUNG

(11) **EP 3 168 443 A1**
(43) Veröffentlichungstag der Anmeldung: **17.05.2017**
(21) Anmeldenummer: 15193848.7
(22) Anmeldetag: 10.11.2015
(51) Int. Cl.: F02C 7/28

(54) **VERFAHREN ZUR MONTAGE EINER TURBOMASCHINE, TURBOMASCHINE**

(71) Anmelder: Siemens Aktiengesellschaft, 80333 München (DE)
(72) Erfinder: Naß, Dieter, 47447 Moers (DE); Senyk, Gregor, 47506 Neukirchen-Vluyn (DE)

(57) **Zusammenfassung**

Die Erfindung betrifft ein Verfahren zur Montage einer Turbomaschine (TCO),
wobei die Turbomaschine (TCO) ein Außengehäuse (OC) aufweist, wobei die Turbomaschine (TCO) ein Innenteil (IP) zur Anordnung in dem Außengehäuse (OC) aufweist,
wobei das Außengehäuse (OC) eine sich entlang einer Achse (X) erstreckende Teilfuge (SP) aufweist, derart, dass das Außengehäuse (OC) in ein Außengehäuseoberteil (UP) und ein Außengehäuseunterteil (LP) zerteilbar ausgebildet ist,
wobei das Innenteil (IP) im Betrieb zur Rotation um die Achse (X) vorgesehene Rotorteile (RE) und statische Bauteile (SE) umfasst,
wobei das Innenteil (IP) mindestens eine sich in Umfangsrichtung erstreckende Dichtung (SL) zur Abdichtung eines Spaltes (GP) zwischen dem Innenteil (IP) und einer Dichtfläche (SLS) des Außengehäuses (OC) aufweist,
wobei das Verfahren die Schritte umfasst:
a) Bereitstellen des Außengehäuseunterteils (LP),
b) Einsetzen des Innenteils (IP) in das Außengehäuseunterteil (LP) in einer ersten Axialposition (AX1),
c) Zusammenfügen des Außengehäuseunterteils (LP) und des Außengehäuseoberteils (UP),
d) axiales Verschieben des Innenteils (IP) in dem Außengehäuse (OC) relativ zu dem Außengehäuse (OC) von der ersten Axialposition (AX1) in eine axiale Endposition (AX2), so dass die Dichtung (SL) in Kontakt tritt mit der Dichtfläche (SLS). Mittels des Verfahrens werden Dichtungs- bzw. Montageprobleme vermieden.

## Beschreibung

Die Erfindung betrifft ein Verfahren zur Montage einer Turbomaschine,
wobei die Turbomaschine ein Außengehäuse aufweist,
wobei die Turbomaschine ein Innenteil zur Anordnung in dem Außengehäuse aufweist,
wobei das Außengehäuse eine sich entlang einer Achse erstreckende Teilfuge aufweist, derart, dass das Außengehäuse in ein Außengehäuseoberteil und ein Außengehäuseunterteil zerteilbar ausgebildet ist,
wobei das Innenteil im Betrieb zur Rotation um die Achse vorgesehene Rotorteile und statische Bauteile umfasst,
wobei das Innenteil mindestens eine sich in Umfangsrichtung erstreckende Dichtung zur Abdichtung eines Spaltes zwischen dem Innenteil und einer Dichtfläche des Außengehäuses aufweist. Daneben betrifft die Erfindung eine Turbomaschine zur Montage nach dem Verfahren.

Turboverdichter die für das Montage-Verfahren der eingangs definierten Art vorgesehen sind, sind insbesondere als größere Maschinen weit verbreitet. Beispielsweise in der Druckschrift WO 2013/121012 A1 ist bereits ein Turboverdichter beschrieben, der eine horizontale Teilfuge aufweist. In vereinfachter Darstellung ist dort gezeigt, dass ein Außengehäuseunterteil bereitgestellt wird, ein Innenteil in das Außengehäuseunterteil eingelegt wird und ein Außengehäuseoberteil auf das Außengehäuseunterteil aufgesetzt wird, so dass gemeinsam mit an dem Innenteil angebrachten Deckeln, die die Stirnseiten des Außengehäuses von innen verschließen, ein geschlossenes Außengehäuse entsteht. Aus dem Außengehäuse sind Wellenenden herausgeführt, um Drehmomente auf den Rotor des Turboverdichters zu übertragen. Grundsätzlich ist die Turbomaschine nach der Erfindung und auch nach dem zitierten Stand der Technik als Verdichter oder Expander ausführbar. In der Folge wird häufig nur auf einen Verdichter Bezug genommen, wobei in der Regel die jeweilige Ausbildung der Erfindung, dass die entsprechende technische Lehre auch auf einen Expander anwendbar ist. Die Darstellungen der Figur 1 der WO 2013/121012 A1 ist derart vereinfacht, dass als stehende Bauteile des Innenteils ausschließlich die stirnseitigen Deckel des Außengehäuses gezeigt sind. Tatsächlich befinden sich zwischen den verschiedenen rotierenden Laufrädern des Rotors sogenannte Zwischenböden, die ein Prozessfluid für den Eintritt in die jeweils nachfolgende Stufe strömungstechnisch vorbereiten. Diese sogenannten Zwischenböden haben neben der aerodynamischen Funktion der Führung des Prozessfluids auch die Aufgabe, gegen Differenzdrücke zwischen den einzelnen Verdichtungsstufen abzudichten. Diese Abdichtfunktion wird in der Regel mittels einer umlaufenden Dichtung zwischen dem Innenteil und dem Außengehäuse umgesetzt, so dass beispielsweise eine O-Ringdichtung in einer umlaufenden Nut am Innenteil angeordnet gegen eine Dichtfläche auf der Innenseite des Außengehäuses gequetscht den Differenzdruck abdichtet.

Ein Nachteil der bisherigen Gestaltung und Montagemethode liegt darin, dass beim Aufsetzen des Außengehäuseoberteils auf das Außengehäuseunterteil bei eingelegtem Innenteil das sich in Umfangsrichtung erstreckende Dichtelement regelmäßig beschädigt wird. Bereits beim Einlegen des Innenteils in das Außengehäuseunterteil wird das Dichtelement oberhalb des Teilfugenbereichs mehr oder weniger stark herausgedrückt bzw. zu einer Wulst aufgeschoben in Folge der Kompression zwischen dem Außengehäuseunterteil und dem Innenteil in radialer Richtung und wegen der in Umfangsrichtung wirkenden Reibkraft auf die Dichtung bei Einsetzen der Innenteils. Beim Auflegen des Außengehäuseoberteils wird das Dichtelement zusätzlich radial komprimiert und im Teilfugenbereich noch stärker radial herausgedrückt. In der letzten Phase des Absenkens des Außengehäuseoberteils auf das Außengehäuseunterteil wird das Dichtelement im Teilfugenbereich zwischen Außengehäuseoberteil und dem Außengehäuseunterteil bisweilen so stark geklemmt, dass der dort aus der Dichtungsnut radial herausstehende Wulst abgeschält werden kann. Auf diese Weise kann es vorkommen, dass die Dichtung schon vor der Inbetriebnahme beschädigt ist und es schon eingangs zu Leckagen kommt.

Die Erfindung hat es sich zur Aufgabe gemacht, ein Verfahren zur Montage zu entwickeln und eine Turbomaschine derart weiterzubilden, dass die vorabbeschriebenen Probleme nicht mehr auftreten.

Zur Lösung schlägt die Erfindung ein Verfahren der eingangs genannten Art mit den zusätzlichen Merkmalen des kennzeichnenden Teils des Anspruchs 1 vor. Daneben schlägt die Erfindung eine Turbomaschine gemäß dem Vorrichtungsanspruch vor. Die jeweils rückbezogenen Unteransprüche beinhalten vorteilhafte Weiterbildungen der Erfindung.

In der Terminologie dieses Dokuments beziehen sich Begriffe, wie axial, radial oder Umfangsrichtung stets auf die Achse des Außengehäuses. Diese Achse ist identisch oder zumindest parallel zu der Rotationsachse der Turbomaschine bzw. des Rotors der Turbomaschine.

Das Außengehäuse ist als Außengehäuse bezeichnet, weil es den Innenteil äußerlich umgibt. Entsprechendes gilt quasi umgekehrt (mutatis mutandis) für das Innenteil.

Die sich entlang der Achse erstreckende Teilfuge ist bevorzugt im Wesentlichen eben ausgebildet, so dass sich eine Teilfugenebene ergibt. Diese Teilfugenebene erstreckt sich zumindest parallel zu der Achse der Turbomaschine. Im Rahmen der Ungenauigkeiten der Fertigung und der Ausrichtungstoleranzen verschiedener Komponenten der Turbomaschine zueinander befindet sich im Betrieb die Rotationsachse des Rotors der Turbomaschine im Wesentlichen in der Teilfugenebene. Die Teilfugenebene ist radial zumindest derart ausgerichtet, dass ein problemloses Einfügen des Innenteils in das Außengehäuse möglich ist. Das Außengehäuse weist an den axialen Stirnseiten jeweils eine Öffnung auf, damit Wellenenden des Rotors des Innenteils axial aus dem Außengehäuse stirnseitig hinausgeführt werden können. Diese mindestens auf einer Axialseite vorgesehenen Wellenenden, die durch axiale Öffnungen des Außengehäuses hindurchgeführt sind, dienen der Übertragung von Drehmomenten von und auf den Rotor der Turbomaschine. Eine derartige Öffnung ist jeweils im Bereich eines Spaltes zwischen der Welle und den statischen Bauteilen des Außengehäuses, die die Öffnung definieren, mittels mindestens einer Wellendichtung abgedichtet.

Besonders bevorzugt weist das Außengehäuse stirnseitig verschließende Deckel auf, die eine von dem Außengehäuseunterteil und dem Außengehäuseoberteil gebildete, bevorzugt weitestgehend zylindrische, Mantelstruktur des Außengehäuse - einen Außengehäusemantel - stirnseitig verschließend zu einem vollständigen Außengehäuse ausbilden.

Eine weitere bevorzugte Weiterbildung der Erfindung sieht vor, dass die das Außengehäuse stirnseitig verschließenden Deckel innenseitig an Anlageschultern des Außengehäusemantels derart anliegen, dass ein gegenüber dem Umgebungsdruck erhöhter Innendruck im Außengehäuse diese Deckel axial gegen diese Anlageschultern presst.

Bevorzugt handelt es sich bei den erfindungsgemäßen Turbomaschinenen um Anlagen, bei denen in dem gattungsgemäßen Außengehäuse stets im Normalbetrieb ein gegenüber dem äußeren Umgebungsdruck erhöhter Innendruck vorliegt.

Besonders bevorzugt ist der jeweils stirnseitig vorgesehene Deckel in der Terminologie der Erfindung Bestandteil des Innenteils und wird gemeinsam mit dem Rotor und ggf. weiteren nicht rotierenden Bauteilen im Rahmen des erfindungsgemäßen Verfahrens zur Montage in das Außengehäuseunterteil eingelegt. Zur axialen Herausführung von Wellenenden des Rotors aus dem Außengehäuse weist der jeweils stirnseitig vorgesehene Deckel eine Öffnung auf. Diese Öffnung weist bei eingelegter Welle des Rotors einen sich in Umfangsrichtung zwischen der Öffnungskontur und der Wellenoberfläche ausgebildeten Spalt auf, der bevorzugt mittels mindestens einer Wellendichtung abdichtbar ist. Bevorzugt ist diese Wellendichtung an dem jeweiligen Deckel angebracht. Besonders bevorzugt ist der Deckel außerdem Träger eines Radiallagers und ggf. zumindest auf einer axialen Seite auch eines Axiallagers. Die Anbringung dieser verschiedenen Komponenten an dem Deckel hat den besonderen Vorteil, dass die Ausrichtarbeiten der Wellendichtung und der jeweiligen Lagerungen zueinander stark vereinfacht werden und die Lage- und Fertigungstoleranzketten verkürzt sind, so dass bei gleichbleibendem Fertigungs- und Ausrichtaufwand eine bessere Präzision erreicht werden kann.

Damit der auf der jeweiligen axialen Stirnseite vorgesehene Deckel zum Verschließen des Außengehäuses in allen Betriebszuständen axial sicher positioniert ist, ist es zweckmäßig, wenn die Axialposition des Deckels an dem Außengehäuse mittels spezieller Befestigungselemente bzw. Befestigungsvorrichtungen gesichert ist.

Besonders bevorzugt ist das Innengehäuse zumindest abschnittsweise zylindrisch ausgebildet, so dass ein axiales Verschieben des Innengehäuses im Außengehäuse zumindest in den Grenzen der erfindungsgemäßen Erfordernisse möglich ist. Besonders zweckmäßig kann auch das Außengehäuse zumindest abschnittsweise zylindrisch ausgebildet sein, so dass keine axialen Kollisionen zwischen dem Innengehäuse und dem Außengehäuse im Rahmen der erfindungsgemäßen Axialverschiebung erfolgen. Zwischen dem Innengehäuse und dem Außengehäuse kann zum Zweck der Axialverschiebung eine Gleitlagerung der entsprechenden Zylinderabschnitte der Innengehäuse-Außenkontur und der Außengehäuse-Innenkontur vorgesehen sein. Zumindest im Rahmen der axialen Verschieblichkeit sollte das Außengehäuse hinsichtlich der Innenkontur eine längere Axialerstreckung der zylindrischen Geometrie aufweisen, so dass das Innengehäuse in dem Außengehäuse axial weitestgehend widerstandsfrei verschoben werden kann.

Damit die Dichtung, die sich in Umfangsrichtung um das Innengehäuse erstreckt, beim Absenken des Innenteils in das Außengehäuseunterteil und beim Aufsetzen des Außengehäuseoberteils auf das Außengehäuseunterteil radial im Wesentlichen kontaktfrei ist, ist es zweckmäßig, wenn in der entsprechenden der Dichtung beim Einsetzen gegenüberliegenden Axialposition die innere Oberfläche des Außengehäuses eine Vertiefung aufweist, die radial gegenüber der axial dazu benachbarte Dichtfläche aufgeweitet ist. In diesem Zusammenhang ist die Dichtfläche diejenige, an der nach erfolgter Axialverschiebung des Innengehäuses relativ zu dem Außengehäuse, die sich in Umfangsrichtung erstreckende Dichtung zur dichtenden Anlage kommt. Diese Vertiefung kann als sich in Umfangsrichtung erstreckende Nut ausgebildet sein. Hierbei weist diese Nut bevorzugt eine in der Größenordnung der Dichtung (Größenordnung bedeutet hier einen Nuttiefe von etwa 20% - 100% des Radialmaßes des Dichtungsquerschnitts, die Fase kann zwischen 50% - 100% Tiefenerstreckung der Nuttiefe aufweisen und z.B. in 15°-20° ausgeführt sein) ausgebildete Fase auf, die verhindert, dass im Rahmen der axialen Verschiebung des Innengehäuses die Dichtung am Außengehäuse mit dem Eintritt in den abzudichtenden Spalt beschädigt werden kann.

Im Folgenden ist die Erfindung anhand eines speziellen Ausführungsbeispiels unter Bezugnahme auf Zeichnungen näher beschrieben. Es zeigen:
- Figuren 1 - 5: verschiedene Schritte des erfindungsgemäßen Verfahrens des Montageablaufs in schematischer Darstellung,
- Figur 6: einen schematischen Längsschnitt durch eine Teilfugenebene einer erfindungsgemäßen Turbomaschine,
- Figur 7, 8: jeweils ein Detail, das in den Figuren 3, 4, 5 mit VII, VIII ausgewiesen ist.

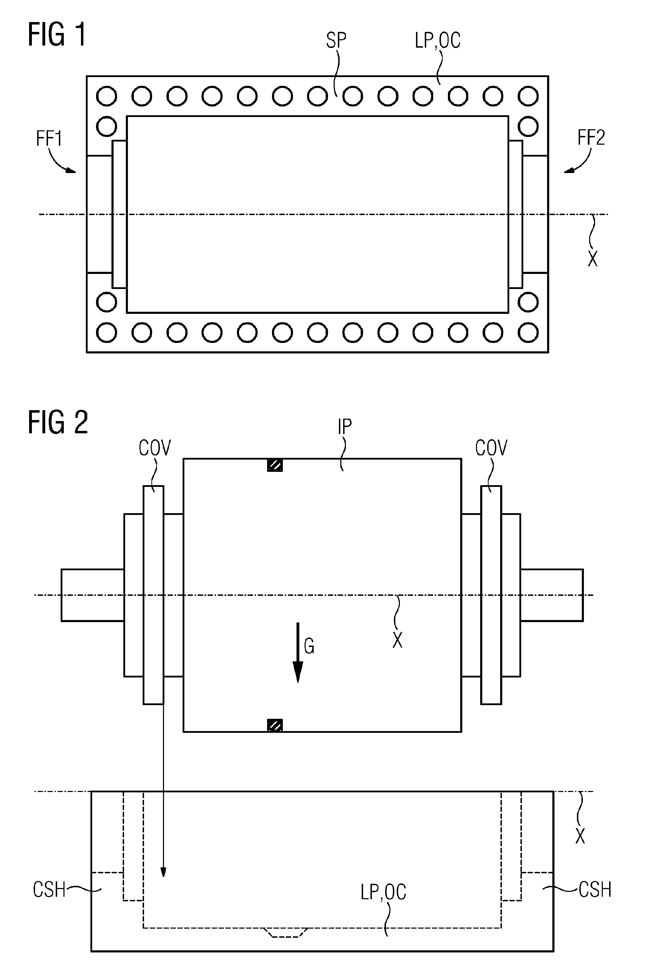

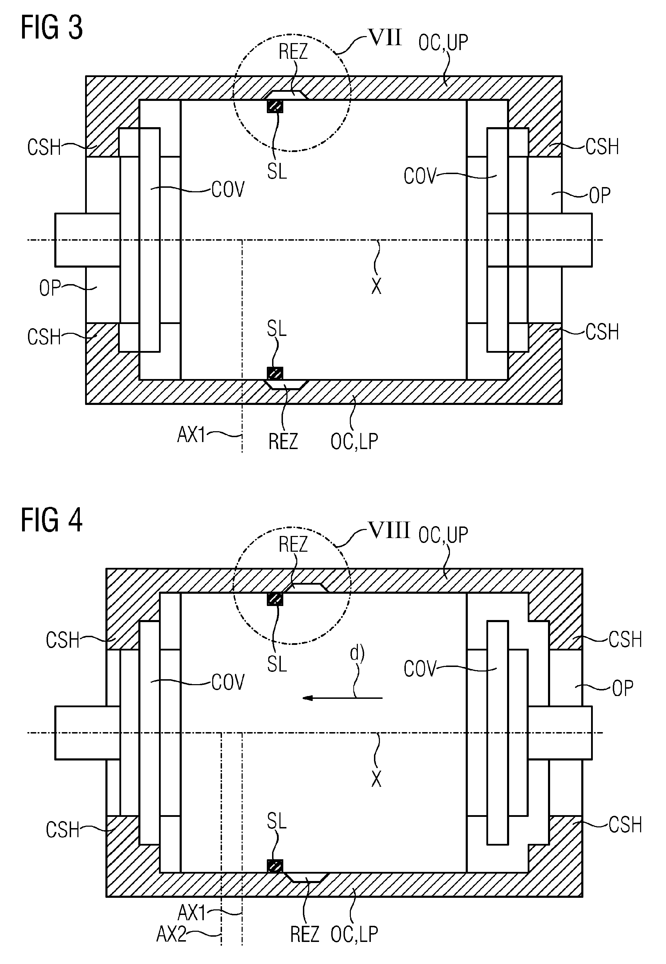

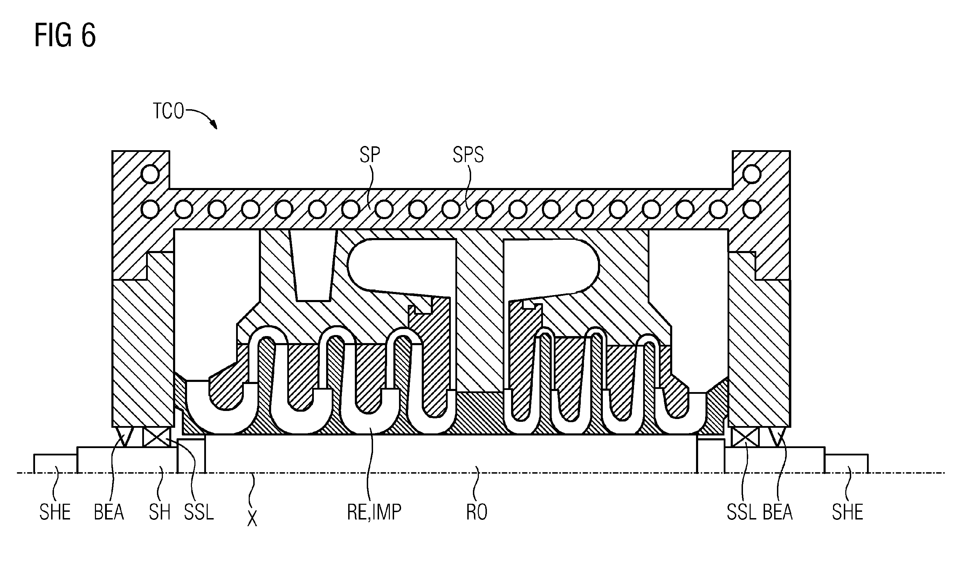

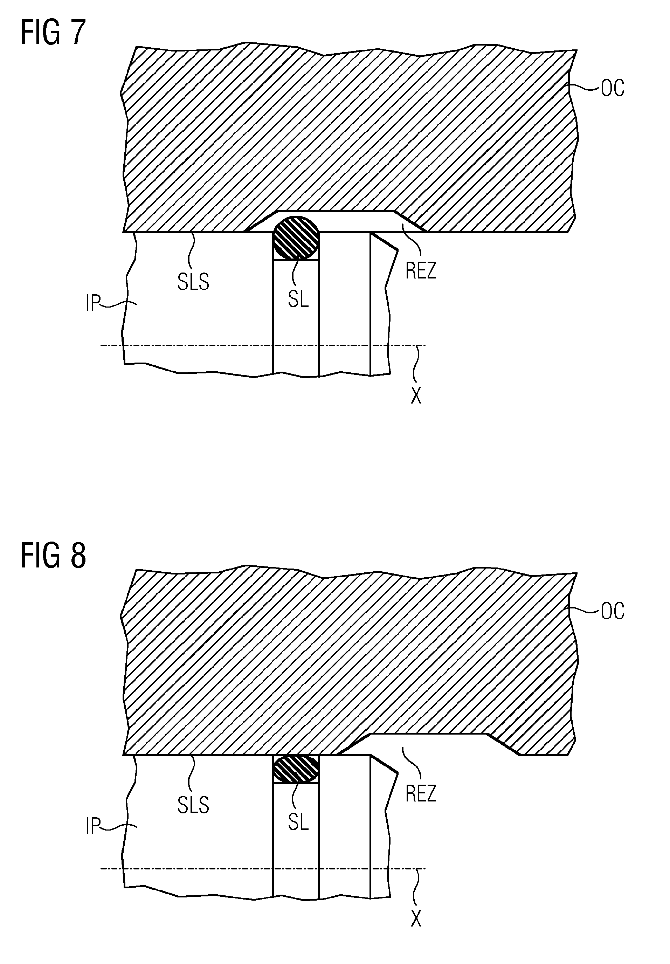

Die Figuren 1 bis 5 zeigen schematisch aus teilweise unterschiedlichen Perspektiven den Ablauf eines erfindungsgemäßen Verfahrens zur Montage einer erfindungsgemäßen Turbomaschine TCO. In schematischer Darstellung zeigt die Figur 6 eine radiale Hälfte eines Längsschnitts in einer Teilfugenebene SPS entlang einer Achse X - hier gleichbedeutend mit einer Rotationsachse, einer erfindungsgemäßen Turbomaschine TCO. Die Figuren 7 und 8 zeigen jeweils ein Detail, das in den Figuren 3, 4, 5 mit VII, VIII ausgewiesen ist.

Identische Bezugszeichen weisen jeweils auf identische Funktionen von zumindest weitestgehend identischen Bauelementen hin. Diese spezielle Figurenbeschreibung gilt jeweils figurenübergreifend, es sei denn, es wird auf eine spezielle Figur Bezug genommen.

Figur 1 zeigt die Bereitstellung eines Außengehäuseunterteils LP eines Außengehäuses OC der erfindungsgemäßen Turbomaschine TCO. Das Außengehäuse OC erstreckt sich entlang einer Achse X, die einerseits eine Längsachse des Außengehäuses OC ist und andererseits weitestgehend zusammenfällt mit der Rotationsachse (nachfolgend auch einfach als Achse X bezeichnet) eines Rotors RO (in Figur 6 gezeigt) umfassend zur Drehung während des Betriebs vorgesehene Rotorteile RE, beispielsweise Laufräder IMP. Das Außengehäuse OC weist eine sich entlang der Achse X in einer Teilfugenebene SPS erstreckende Teilfuge SP auf. Das Außengehäuse OC weist an den axialen Stirnseiten FF1, FF2 jeweils eine mittels eines Deckels COV1, COV2 verschließbare Öffnung OP auf.

Die Laufräder IMP sind, wie in Figur 6 gezeigt, an einer Welle SH angebracht, deren Wellenenden SHE bis außerhalb des Außengehäuses OC sich erstrecken.

In Figur 2 ist ein Schritt b) des erfindungsgemäßen Verfahrens dargestellt, währenddessen, ein Innenteil IP in das Außengehäuseunterteil LP eingesetzt wird. Das radiale Einsetzen des Innenteils IP erfolgt bei horizontaler Ausrichtung der Achse X weitestgehend der Schwerkraft G folgend so lange, bis die Achse X des Innenteils IP - also die Achse der Rotation des Rotors RO weitestgehend deckungsgleich ist mit der Achse X des Außengehäuses OC, so dass das Innenteil IP im Außengehäuse OC mittelbar oder unmittelbar zur radialen Auflage kommt.

In der Figur 3 ist der Abschluss des Zusammenfügens des Außengehäuses OC dargestellt, so dass ein Außengehäuseoberteil UP auf das Außengehäuseunterteil LP das Innenteil IP umgebend radial aufgesetzt ist. Die in dem Ausführungsbeispiel als Außengehäuseunterteil LP und Außengehäuseoberteil UP bezeichneten Bauteile bilden im zusammengefügten Zustand einen Außengehäusemantel, der stirnseitige axiale Öffnungen OP aufweist. Gemeinsam mit dem Innenteil IP sind für diese Öffnungen zum Verschließen vorgesehene Deckel COV1, COV2 als Bestandteil des Innenteils in das Außengehäuseunterteil LP eingebracht worden. Das Außengehäuse OC ist derart ausgebildet, dass diese Deckel COV1, COV2 von innen an Anlageschultern CSH im fertiggefügten Zustand axial zur Anlage kommen. Bei einem erhöhten Innendruck werden die Deckel COV1, COV2 an diesen Anlageschultern CSH dichtend angepresst, wobei zum Zwecke der Abdichtung in den Zeichnungen nicht dargestellte zusätzlich Dichtelemente vorgesehen sind. In Figur 3 ist gezeigt, dass die Axialposition des Innenteils IP zu dem Außengehäuse OC einer ersten Axialposition AX1 entspricht, so dass eine sich in Umfangsrichtung erstreckende Dichtung SL der äußeren Oberfläche des Innenteils IP sich in der gleichen Axialposition befindet, wie eine auf der Innenseite des Außengehäuses OC vorgesehene Vertiefung REZ, so dass die Dichtung SL zunächst nicht in Kontakt tritt mit dem Außengehäuse OC.

Figur 4 zeigt den Verfahrensschritt d), bei dem das Innenteil IP axial gegenüber dem Außengehäuse OC verschoben wird. Im Rahmen dieser Axialbewegung tritt die sich in Umfangsrichtung erstreckende Dichtung SL in Kontakt mit einer auf der Innenseite des Außengehäuses OC vorgesehen Dichtfläche SLS, die sich in Umfangsrichtung erstreckt. Die Details dieses Vorgangs sind auch in den Figuren 7, 8 ersichtlich. Beispielhaft ist es möglich, dass die Dichtfläche SLS mit der radial gegenüberliegenden Innengehäuseoberfläche als Spielpassungpaarung mit der Qualität H7/g6 gefertigt ist. Die Vertiefung REZ ist mit einer Fase versehen, so dass die Dichtung SL bei dem axialen Eintritt in den die Dichtposition, in der ein radialer Kontakt zu der Dichtfläche SLS unter Quetschung der Dichtung SL entsteht, nicht beschädigt wird.

In der Figur 6 ist auch gezeigt, dass besonders bevorzugt der Deckel außerdem Träger von Lagern BEA, insbesondere eines Radiallagers und ggf. zumindest auf einer axialen Seite auch eines Axiallagers sein kann. Außerdem ist der Deckel auch als Träger einer Wellendichtung SSL besonders gut geeignet, wie in Figur 6 wiedergegeben.

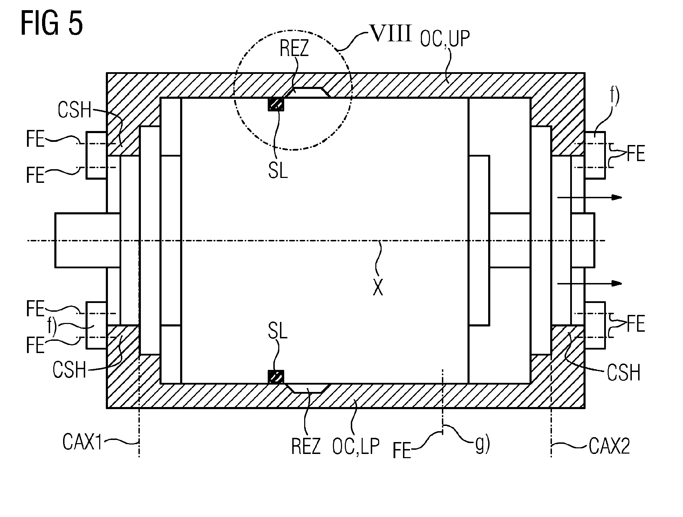

Als eine vorteilhafte Ausführungsmöglichkeit der Erfindung zeigen die Figuren außerdem, dass während des axialen Verschiebens in Schritt d) ein Deckel COV1 gleichfalls seine axiale Endposition erhält. Eine andere vorteilhafte Möglichkeit, das Innenteil IP zu verschieben, zeigt dieses Ausführungsbeispiel, in dem die Verschiebekraft auf das Innenteil IP mittelbar durch den auf der anderen Seite vorgesehenen Deckel COV2 auf das Innenteil IP aufgebracht wird. Figur 5 zeigt in diesem Zusammenhang, dass die beiden Deckel COV1, COV2 jeweils mit Befestigungselementen FE auf den jeweils axialen Stirnseiten FF1, FF2 in ihren jeweiligen Deckelendpositionen CAX1, CAX2 gegen axiale Verschiebung befestigt bzw. gesichert sind.

Alternativ und nicht in den Ausführungsbeispielen dargestellt, kann das Innenteil IP im Wesentlichen unabhängig von den Deckeln COV1, COV2, verschoben werden. Hierzu kann es beispielsweise vorgesehen sein, dass zunächst die Deckel COV1, COV2 in ihre axiale Deckelendposition CAX1, CAX2 gebracht werden und anschließend nach Sicherung der Deckel COV1, COV2 mittels einer Öffnung in dem Außengehäuse OC bzw. den Deckeln COV1, COV2 die für die axiale Verschiebung des Innenteils IP notwendige Kraft auf das Innenteil IP direkt übertragen wird.

Die Druckverhältnisse in der Turbomaschine TCO können den Betrieb derart ausgebildet sein, dass das Innenteil IP in der axialen Endposition AX2 aufgrund von axialen Schüben verbleibt. Zusätzlich oder alternativ kann eine mechanische Sicherung vorgesehen werden, die beispielsweise in einer mechanischen Klemmung realisiert werden kann. Diese Klemmung kann beispielsweise durch eine Öffnung in dem Außengehäuse OC oder durch eine Öffnung an mindestens einem Deckel COV1, COV2 eingebracht bzw. befestigt werden in einer in den Figuren nicht näher dargestellten Art und Weise.

## Patentansprüche

1. Verfahren zur Montage einer Turbomaschine (TCO),
wobei die Turbomaschine (TCO) ein Außengehäuse (OC) aufweist, wobei die Turbomaschine (TCO) ein Innenteil (IP) zur Anordnung in dem Außengehäuse (OC) aufweist,
wobei das Außengehäuse (OC) eine sich entlang einer Achse (X) erstreckende Teilfuge (SP) aufweist, derart, dass das Außengehäuse (OC) in ein Außengehäuseoberteil (UP) und ein Außengehäuseunterteil (LP) zerteilbar ausgebildet ist,
wobei das Innenteil (IP) im Betrieb zur Rotation um die Achse (X) vorgesehene Rotorteile (RE) und statische Bauteile (SE) umfasst,
wobei das Innenteil (IP) mindestens eine sich in Umfangsrichtung erstreckende Dichtung (SL) zur Abdichtung eines radialen Spaltes (GP) zwischen dem Innenteil (IP) und einer Dichtfläche (SLS) des Außengehäuses (OC) aufweist,
**dadurch gekennzeichnet, dass** das Verfahren die Schritte umfasst:
a) Bereitstellen des Außengehäuseunterteils (LP),
b) Einsetzen des Innenteils (IP) in das Außengehäuseunterteil (LP) in einer ersten Axialposition (AX1),
c) Zusammenfügen des Außengehäuseunterteils (LP) und des Außengehäuseoberteils (UP),
d) axiales Verschieben des Innenteils (IP) in dem Außengehäuse (OC) relativ zu dem Außengehäuse (OC) von der ersten Axialposition (AX1) in eine axiale Endposition (AX2), so dass die Dichtung (SL) in Kontakt tritt mit der Dichtfläche (SLS).

2. Verfahren nach Anspruch 1,
wobei das Außengehäuse OC an mindestens einer axialen Stirnseite (FF1, FF2) eine mittels eines Deckels (COV1, COV2) verschlossene Öffnung (UAX) aufweist,
wobei der Deckel (COV1, COV2) Bestandteil des Innenteils (IP) ist,
wobei der Deckel (COV1, COV2) axial mit dem Innenteil (IP) in Schritt d) verschoben wird,
wobei der Deckel (COV1, COV2) in einem Schritt e) ohne den Rest des Innenteils (IP) in gegenüber dem Schritt d) entgegengesetzte Richtung axial verschoben wird, so dass der Deckel (COV1, COV2) in eine axiale Deckelendposition gegenüber dem Außengehäuse (OC) geschoben ist.

3. Verfahren nach Anspruch 2,
wobei der Deckel (COV1, COV2) in einem Schritt f) an dem Außengehäuse (OC) gegen axiales Verschieben mittels Befestigungselementen (FE) gesichert wird.

4. Verfahren nach Anspruch 2 oder 3,
wobei das Innenteil (IP) ohne den Deckel (COV1, COV2) in einem Schritt g) an dem Außengehäuse (OC) oder dem Deckel (COV1, COV2) gegen axiales Verschieben mittels Befestigungselementen (FE) gesichert wird.

5. Turbomaschine (TCO) zur Montage nach dem Verfahren gemäß mindestens einem der Ansprüche 1 - 4,
wobei die Turbomaschine (TCO) ein Außengehäuse (OC) aufweist, wobei die Turbomaschine (TCO) ein Innenteil (IP) zur Anordnung in dem Außengehäuse (OC) aufweist,
wobei das Außengehäuse (OC) eine sich entlang einer Achse (X) erstreckende Teilfuge (SP) aufweist, derart, dass das Außengehäuse (OC) in ein Außengehäuseoberteil (UP) und ein Außengehäuseunterteil (LP) zerteilbar ausgebildet ist,
wobei das Innenteil (IP) im Betrieb zur Rotation um die Achse (X) vorgesehene Rotorteile (RE) und statische Bauteile (SE) umfasst,
wobei das Innenteil (IP) mindestens eine sich in Umfangsrichtung erstreckende Dichtung (SL) zur Abdichtung eines Spaltes (GP) zwischen dem Innenteil (IP) und einer Dichtfläche (SLS) des Außengehäuses (OC) aufweist,
**dadurch gekennzeichnet, dass**
das Innenteil (IP) in dem Außengehäuse (OC) zwischen einer ersten Axialposition (AX1) und einer axialen Endposition (AX2) verschiebbar ausgebildet ist,
wobei das Außengehäuse (OC) neben der Dichtfläche (SLS) derart ausgebildet ist, dass in der ersten Axialposition (AX1) des in das Außengehäuse (OC) eingelegten Innenteils (IP) die Dichtung (SL) nicht in Kontakt mit dem Außengehäuse OC steht und weiterhin das Außengehäuse (OC) derart ausgebildet ist, dass bei einem Verschieben von der ersten Axialposition (AX1) in die axiale Endposition (AX2) die Dichtung (SL) in Kontakt tritt mit der Dichtfläche (SLS) des Außengehäuses (OC).

6. Turbomaschine (TCO) nach mindestens dem vorhergehenden Anspruch 5,
wobei neben der Dichtfläche (SLS) im Außengehäuse (OC) eine Vertiefung (REZ) vorgesehen ist, so dass die Dichtung (SL) in der ersten Axialposition (AX1) nicht mit dem Außengehäuse (OC) in Kontakt tritt.

7. Turbomaschine (TCO) nach mindestens einem der vorhergehenden Ansprüche 5, 6,
wobei das Außengehäuse OC an mindestens einer axialen Stirnseite (FF1, FF2) eine mittels eines Deckels (COV1, COV2) verschlossene Öffnung (OP) aufweist,
wobei der Deckel (COV1, COV2) Bestandteil des Innenteils (IP) ist,
wobei der Deckel (COV1, COV2) von dem Innenteil (IP) lösbar ausgebildet ist,
wobei der Deckel (COV1, COV2) in einer axialen Deckelendposition (CAX2) an einem Innenabsatz (ISH) des Außengehäuses (OC) von axial innen anliegt, derart, dass ein Innendruck im Außengehäuses (OC) den Deckel (COV1, COV2) gegen den Innenabsatz (ISH) axial drückt.
